# EUROPEAN PATENT APPLICATION

(11) **EP 4 837 948 A1**
(43) Date of publication of application: **11.11.2026**
(21) Application number: 26172684.8
(22) Date of filing: 16.04.2026
(51) Int. Cl.: C10M 133/56, C10M 141/10

(54) **LUBRICATING FLUID FOR AN ELECTRIC MOTOR**

(30) Priority: 05.05.2025 US 202519198888
(71) Applicant: Afton Chemical Corporation, Richmond, Virginia 23219 (US)
(72) Inventor: DILLON, Kearsley, Glen Allen, 23059 (US); SUTYAK, Keith, Midlothian, 23114 (US)
(74) Representative: SSM Sandmair

(57) **Abstract**

An electric motor lubricating fluid for an electric motor system including a lubricating base oil, succinimide dispersants having selected nitrogen capping agents, and an oil-soluble phosphours antiwear additive in amounts to facilitate effective performance in copper leaching and extreme pressure scuffing.

## Description

### TECHNICAL FIELD

The present disclosure relates to methods of using a lubricating fluid and to a lubricating fluid for an electric motor system. In particular, the disclosed methods and compositions relate to a lubricating fluid suitable for electric or hybrid-electric vehicles that achieves low copper corrosion and conductivity and high extreme pressure performance.

### BACKGROUND

A major challenge in developing electric vehicle powertrain lubricants is achieving acceptable extreme pressure and electrical conductivity while minimizing copper leaching for compatibility with electrical components in the electric vehicle powertrain. In certain formulations, non-capped succinimide dispersants tend to decrease extreme pressure performance and/or exhibit higher copper leaching. Certain types of capped dispersants, especially those capped with boric acid, phosphorous acid, or phosphoric acid, tend to increase conductivity of the fluid.

### SUMMARY

In one embodiment or approach, an electric motor lubricating fluid suitable for electric or hybrid-electric vehicles is described herein. In one aspect of this embodiment, the electric motor lubricating fluid includes one or more base oils of lubricating viscosity; one or more ashless dialkyl dithiophosphoric acids providing no more than about 200 ppm sulfur to the electric motor lubricating fluid; a succinimide dispersant reaction product obtained by: (i) reacting a hydrocarbyl-substituted dicarboxylic acid or anhydride with a polyalkylene polyamine to form an intermediate having at least one secondary amine; (ii) reacting the secondary amine with a capping agent including one or more of a C6 or greater alkyl halide, acetic anhydride, and/or phenyl isocyanate or an anhydride of an aromatic isocyanate; wherein the electric motor lubricating fluid contains less than about 300 ppm of total sulfur. The electric motor lubricating fluid provides its surprising technical effects even if the electric motor lubricating fluid includes substantially no corrosion inhibitor additive. Preferably therefore, it contains essentially no corrosion inhibitor additive. The ashless dialkyl dithiophosphoric acid functions as an oil-soluble phosphorus antiwear additive, or as a part of an oil-soluble antiwear additive contained in the electric motor lubricating fluid of the invention, wherein the sulfur limitation of no more than 200 ppm relates to the total of ashless dialkyl dithiophosphoric acids. The same may also be expressed by requiring "an oil-soluble phosphorus antiwear additive including an ashless dialkyl dithiophosphoric acid providing no more than about 200 ppm sulfur to the electric motor lubricating fluid".

In another embodiments or approaches, the electric motor lubricating fluid of the previous paragraph may include one or more other features in any combination. These other features may include one or more embodiments of the following: wherein the electric motor lubricating fluid is substantially free of boron; and/or wherein the one or more ashless dialkyl dithiophosphoric acids provides 10 to 180 ppm, preferably 80 to 150 ppm sulfur to the electric motor lubricating fluid; and/or wherein the electric motor lubricating fluid contains 20 to 250. Preferably 80 to 200 ppm of total sulfur; and/or wherein the alkyl halide is an octyl halide; and/or wherein the octyl halide is octyl bromide; and/or wherein the succinimide dispersant has a TBN of about 4 to about 25 and provides a TBN of about 1.0 to about 3.0 to the electric motor lubricating fluid; and/or further including a sulfonate detergent in amounts to contribute a TBN of about 3 to about 50 (ASTM D2896) to the electric motor lubricating fluid; and/or wherein the sulfonate detergent is calcium sulfonate and provides about 10 to about 250 ppm calcium to the electric motor lubricating fluid; and/or further including up to about 0.8 weight percent, preferably 0.05 to 0.7 weight percent of one or more aminic antioxidants; and/or wherein the one or more aminic antioxidants is selected from diarylamine antioxidants, diphenylamine; alkylated diphenylamines, 3-hydroxydiphenylamine, N-phenyl-1,2-phenylenediamine, N-phenyl-1,4-phenylenediamine, monobutyldiphenyl-amine, dibutyl-diphenylamine, monooctyldiphenylamine, dioctyldiphenylamine, monononyl-diphenylamine, dinonyldiphenylamine, monotetradecyldiphenylamine, ditetradecyl-diphenylamine, phenyl-alpha-naphthylamine, monooctyl phenyl-alpha-naphthylamine, phenyl-beta-naphthylamine, monoheptyldiphenylamine, diheptyl-diphenylamine, p-oriented styrenated diphenylamine, mixed butyloctyldiphenylamine, mixed octylstyryl-diphenylamine, or combinations thereof; and/or wherein the electric motor lubricating fluid is substantially free of corrosion inhibitor additives selected from substituted or unsubstituted benzotriazole or triazole compounds, tolyltriazole compounds, corrosion inhibitors derived from monocarboxylic or polycarboxylic acids, akenyl succinic acid or anhydride corrosion inhibitors, corrosion inhibitors derived from ether amines, acid phosphates, polylethoxylated compounds, imidazolines, or combinations thereof, preferably wherein the electric motor lubricating fluid includes substantially no corrosion inhibitor additive; and/or wherein the oil-soluble phosphorus antiwear additive including the ashless dialkyl dithiophosphate is made by a process comprising the steps of (a) reacting an organic hydroxy compound with phosphorus pentasulfide to form a reaction product and (b) further reacting the reaction product with an unsaturated carboxylic acid to form the oil-soluble phosphorus antiwear additive including the ashless dialkyl dithiophosphate; and/or wherein the ashless dialkyl dithiophosphate includes a compound of Formula I, or a salt thereof: 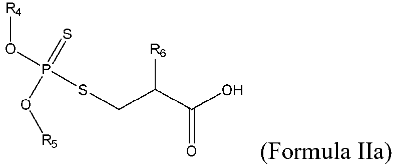 wherein R₄ and R₅ are, independently, a C₁ to C₁₀ linear or branched alkyl group, and R₆ is -H or -CH₃; and/or wherein the ashless dialkyl dithiophosphoate includes 3-[[bis(2-methylpropoxy) phosphinothioyl]thio]-2-methyl-propanoic acid; and/or wherein the succinimide dispersant is post treated with a capping agent that is substantially free of phosphorus containing compounds and/or substantially free of boron-containing compounds; and/or wherein the electric motor lubricating fluid exhibits about 100 ppm or less of copper leaching pursuant to ASTM D130; and/or wherein the electric motor lubricating fluid has a failure load stage rating of 8 or higher in the FZG A10/16.6R/120 test of ASTM D5182; and/or wherein the electric motor lubricating fluid exhibits an electrical conductivity of less than 25 nS/M at 100°C measured using a modified conductivity test pursuant to ASTM D2624-15 using the electric motor lubricating fluid and measured at 20 Hz and at 100°C; wherein the secondary amine is selected from one or more of the the group consisting of aminoguanidine bicarbonate (AGBC), diethylene triamine (DETA), triethylene tetramine (TETA), tetraethylene pentamine (TEPA), pentaethylene hexamine (PEHA) and/or polyamine bottoms, a mixture of polyalkylenepolyamines including branched polyamines having two or more primary amines per molecule, the mixture having an average of 5 to 12 nitrogen atoms, preferably at least 6 or about 6.5 nitrogen atoms per molecule; and/or wherein the capping agent is selected from one or more of a C6 to C12, preferably C8 to C10, most preferably C10 alkyl halide, acetic anhydride, phenyl isocyanate.

In yet other approaches or embodiments, the present disclosure provides for a method for lubricating a driveline component including an electric motor as defined in the claims. In aspects of this embodiment, the method includes lubricating the driveline component with an electric motor lubricating fluid as defined in the previous paragraphs, and wherein the electric motor lubricating fluid contacts portions of the electric motor. E.g. in yet other aspects of this embodiment, the electric motor lubricating fluid includes (a) one or more base oils of lubricating viscosity; (b) an oil-soluble phosphorus antiwear additive including an ashless dialkyl dithiophosphoric acid providing no more than about 200 ppm sulfur to the electric motor lubricating fluid; (c) a succinimide dispersant reaction product obtained by: (i) reacting a hydrocarbyl-substituted dicarboxylic acid or anhydride with a polyalkylene polyamine to form an intermediate having at least one secondary amine, and (ii) reacting the secondary amine with a capping agent including one or more of a C6 or greater alkyl halide, an acetic anhydride, and/or phenyl isocyannate; and (d) wherein the electric motor lubricating fluid contains less than about 300 ppm total sulfur; and wherein the electric motor lubricating fluid exhibits one or more of the following: about 100 ppm or less of copper leaching pursuant to ASTM D130, a failure load stage rating of 8 or higher in the FZG A10/16.6R/120 test of ASTM D5182, and/or an electrical conductivity of less than 25 nS/M at 100°C measured using a modified conductivity test pursuant to ASTM D2624-15 using the electric motor lubricating fluid and measured at 20 Hz and at 100°C.

In yet other approaches or embodiments, the method of the previous paragraph may include one or more other features, steps, or embodiments in any combination. These other features, steps, or embodiments may include one or more of the following in any combination: wherein the electric motor lubricating fluid is substantially free of boron; and/or wherein the alkyl halide is an octyl halide; and/or wherein the octyl halide is octyl bromide; and/or wherein the mono- or bis-succinimide dispersant has a TBN of about 4 to about 25 and provides a TBN of about 1.0 to about 3.0 to the electric motor lubricating fluid; and/or further including a sulfonate detergent in amounts to contribute a TBN of about 3 to about 50 (ASTM D2896) to the electric motor lubricating fluid; and/or wherein the sulfonate detergent is calcium sulfonate and provides about 10 to about 250 ppm calcium to the electric motor lubricating fluid; and/or further including up to about 0.8 weight percent of one or more aminic antioxidants; and/or wherein the one or more aminic antioxidants is selected from diarylamine antioxidants, diphenylamine; alkylated diphenylamines, 3-hydroxydiphenyl amine, N-phenyl-1,2-phenylenediamine, N-phenyl-1,4-phenylenediamine, monobutyldiphenyl-amine, dibutyl-diphenylamine, monooctyldiphenylamine, dioctyldiphenylamine, monononyl-diphenylamine, dinonyldiphenylamine, monotetradecyldiphenylamine, ditetradecyl-diphenylamine, phenyl-alpha-naphthylamine, monooctyl phenyl-alpha-naphthylamine, phenyl-beta-naphthylamine, monoheptyldiphenylamine, diheptyl-diphenylamine, p-oriented styrenated diphenylamine, mixed butyloctyldiphenylamine, mixed octylstyryl-diphenylamine, or combinations thereof; and/or wherein the electric motor lubricating fluid is substantially free of corrosion inhibitor additives selected from substituted or unsubstituted benzotriazole or triazole compounds, tolyltriazole compounds, corrosion inhibitors derived from monocarboxylic or polycarboxylic acids, akenyl succinic acid or anhydride corrosion inhibitors, corrosion inhibitors derived from ether amines, acid phosphates, polylethoxylated compounds, imidazolines, or combinations thereof; and/or wherein the oil-soluble phosphorus antiwear additive including the ashless dialkyl dithiophosphate is made by a process comprising the steps of (a) reacting an organic hydroxy compound with phosphorus pentasulfide to form a reaction product and (b) further reacting the reaction product with an unsaturated carboxylic acid to form the oil-soluble phosphorus antiwear additive including the ashless dialkyl dithiophosphate; and/or wherein the ashless dialkyl dithiophosphate includes a compound of Formula I, or a salt thereof: 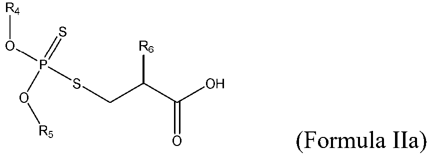 wherein R₄ and R₅ are, independently, a C₁ to C₁₀ linear or branched alkyl group, and R₆ is -H or -CH₃; and/or wherein the ashless dialkyl dithiophosphoate includes 3-[[bis(2-methylpropoxy) phosphinothioyl]thio]-2-methyl-propanoic acid; and/or wherein the succinimide dispersant is post treated with a capping agent that is substantially free of phosphorus containing compounds and/or substantially free of boron-containing compounds.

In a further embodiment, the use of any embodiment of the electric motor lubricating fluid as described in the compositions and/or methods of this Summary is also provided for improving one or more of copper corrosion resistance, low electrical conductivity and extreme pressure performance. In yet other embodiments, the use of any embodiment of the electric motor lubricating fluid as described in the compositions and/or methods of this Summary is also provided for lubricating the driveline component of an electric or hybrid-electric vehicle and for achieving one or more of the following: about 100 ppm or less of copper leaching pursuant to ASTM D130, for achieving a failure load stage (FLS) rating of 8 or higher in the FZG A10/16.6R/120 test of ASTM D5182; and/or for achieving an electrical conductivity of less than 25 nS/M at 100°C pursuant to modified ASTM D2624-15 using the electric motor lubricating fluid and measured at 20 Hz and at 100°C.

Other embodiments of the present disclosure will be apparent to those skilled in the art from consideration of the specification and practice of the invention disclosed herein.

### DETAILED DESCRIPTION

According to exemplary embodiments, an electric motor lubricating fluid suitable for electric or hybrid-electric vehicles is described herein that achieves low copper leaching while also providing acceptable FZG failure load stage (FLS) scuffing performance and/or electrical conductivity. It was discovered that the choice of nitrogen capping agent for succinimide dispersant post-treatment unexpectedly impacts not only the copper leaching performance (e.g., ASTM D130), but also the extreme pressure performance (e.g., FZG A10/16.6R/120 from ASTM D5182) and electrical conductivity of lubricants (e.g., ASTM D2624-15 at 20 Hz and at 100°C) when the lubricants also included an ashless dialkyl dithiophosphoric acid.

The present application relates to the discovery that lubricating fluids suitable for electric vehicle powertrains can improve copper leaching, extreme pressure, and/or electrical conductivity performance with capped succinimide dispersants through the correct selection of succinimide post-treatment capping agents. In particular, the present disclosure provides for an electric motor lubricating fluid suitable for electric or hybrid-electric vehicles and including at least (a) one or more base oils of lubricating viscosity; (b) an oil-soluble phosphorus antiwear additive including an ashless dialkyl dithiophosphoric acid providing no more than about 200 ppm sulfur to the electric motor lubricating fluid; and (c) a succinimide dispersant reaction product obtained by (i) reacting a hydrocarbyl-substituted dicarboxylic acid or anhydride with a polyalkylene polyamine to form an intermediate having at least one secondary amine and (ii) reacting the secondary amine with a capping agent selected from one or more of C6 or greater alkyl halide, acetic anhydride, and/or phenyl isocyanate. As discussed more below, the selected post treatment or capping agents form alkyl capping groups, acetyl capping groups, and/or unsubstituted anilide capping groups as derived from the respective capping agents. Preferably, the electric motor lubricating fluids of this disclosure also contain less than about 300 ppm of total sulfur and, in some embodiments, are substantially free of boron and/or substantially free of corrosion inhibitor additives. As used herein, substantially free of boron means the electric motor lubricating fluids have less than about 10 ppm of boron, less than about 5 ppm of boron, or no functional amounts of boron. As also used herein, substantially free of corrosion inhibitor additives means the electric motor lubricating fluids have less than about 0.002 weight percent of corrosion inhibitor additives, less than about 0.001 weight percent of corrosion inhibitor additives, or no functional amounts of corrosion inhibitor additives. A corrosion inhibitor as understood in the context of the present invention is understood to be a compound that, when used at 0.1 to 1.0 weight percent in a fluid, inhibits copper leaching in a fluid such that the fluid has less than about 100 ppm or less of copper leaching when measured pursuant to ASTM D130-19, with the exception of succinimide dispersants, or that is selected from substituted or unsubstituted benzotriazole or triazole compounds, tolyltriazole compounds, corrosion inhibitors derived from monocarboxylic or polycarboxylic acids, akenyl succinic acid or anhydride corrosion inhibitors, corrosion inhibitors derived from ether amines, acid phosphates, polylethoxylated compounds, imidazolines, or combinations thereof.

### Oil-Soluble Phosphorus Antiwear Additive

In approaches or embodiments, the electric motor lubricating fluids herein first include an oil-soluble phosphorus antiwear additive in the form of an ashless dialkyl dithiophosphoric acid.

In one embodiment, the ashless dialkyl dithiophosphoric acid additive provides about 35 ppm to about 100 ppm of phosphorus (in other approaches, about 45 to about 90 ppm phosphorus or about 55 to about 90 ppm or about 55 to about 75 ppm phosphorus) and about 75 ppm to about 200 ppm sulfur (in other approaches, about 95 to about 180 ppm sulfur, about 95 to about 160 ppm sulfur, or about 120 to about 160 ppm sulfur) to the electric motor lubricating fluid. In some embodiments, the electric motor lubricating fluids herein include about 0.04 to about 0.10 weight percent of the ashless dialkyl dithiophosphate acid (in other approaches, about 0.05 to about 0.09 weight percent, or about 0.05 to about 0.08 weight percent, or about 0.06 to about 0.08 weight percent).

In an embodiment, the ashless dialkyl dithiophosphoric acid has a structure of the compounds shown in Formula II or a salt thereof 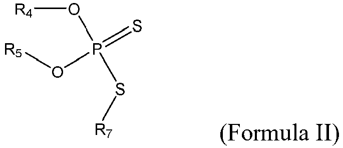 wherein R₄ and R₅ of Formula II above are each, independently, a linear or branched C₁ to C₁₀ hydrocarbyl group and R₇ of Formula II above is a C₁ to C₁₀ linear or branched carboxylic group or a C₁ to C₁₀ linear or branched alkyl alkanoate group. Preferably, R₄ and R₅ of Formula II above are each a C₃ to C₈ linear or branched alkyl group and R₇ of Formula II above is derived from 2-methyl proponoic acid such that the phosphorus product (or a salt thereof) has the structure of Formula IIa below: 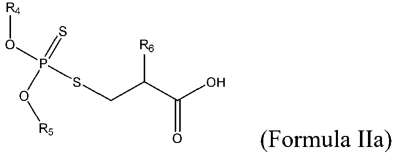 wherein R₄ and R₅ of Formula IIa are defined as noted with respect to Formula II above and are, independently, a C₁ to C₁₀ or a C₃ to C₈ linear or branched alkyl group (preferably, a branched C₄ group), and R₆ of Formula IIa above is -H or -CH₃. In some approaches or embodiments, the oil-soluble phosphorus antiwear additive of the compositions and methods herein is preferably 3-[[bis(2-methylpropoxy) phosphinothioyl]thio]-2-methyl-propanoic acid.

In some approaches, the oil-soluble phosphorus antiwear additive including the ashless dialkyl dithiophosphoric acid is made by a process comprising the steps of (a) reacting an organic hydroxy compound with phosphorus pentasulfide (in some forms, a monomer or a dimer thereof) to form a reaction product and (b) further reacting the reaction product with an unsaturated carboxylic acid to form the oil-soluble phosphorus antiwear additive including the ashless dialkyl dithiophosphate.

Suitable organic hydroxy compounds may include normal straight chain alcohols, branched chain alcohols, hydroxy aryl compounds, such as phenol and naphthol, substituted aryl hydroxy compounds, such as diamyl phenol, or any other hydroxy organic material in which the hydroxy group will react with the phosphorus pentasulfide, In one approach, the staring alcohols are saturated alcohols or substituted aryl hydroxy compounds such as aryl hydroxy compounds substituted by saturated alkyl radicals. In some approaches, the organic hydroxy compound may be a C₁ to C₁₀ (in other approaches, a C₁ to C₆) linear or branched alcohols, a hydroxy aryl compound, or mixtures thereof such as one or more of methyl alcohol, ethyl alcohol, propyl alcohol, isopropyl alcohol, butyl alcohol, isobutyl alcohol, tert-butyl alcohol, sec-butyl alcohol, phenol, naphthol, an amyl alcohol, hexyl alcohol, iso-hexyl alcohol, octyl alcohol, decyl alcohol, dodecyl alcohol, octadecyl alcohol, 2-ethylhexyl alcohol, 4-methyl-2-pentyl alcohol, phenyl alcohol, butylphenyl alcohol, cyclohexyl alcohol, methylcyclopentyl alcohol, propenyl alcohol, butenyl alcohol, or combinations thereof. Preferred organic hydroxy compounds herein include C₁ to C₄ alcohols such as ethyl alcohol, propyl alcohol, or isopropyl alcohol, and most preferably, the organic hydroxy compound is isobutyl alcohol.

Suitable unsaturated carboxylic acids to form the oil-soluble phosphorus antiwear additives of the present disclosure may include a wide variety of unsaturated carboxylic acids or fatty acids. Preferred unsaturated carboxylic acids may include C₁ to C₂₀ unsaturated fatty acids such as acrylic acid, methacrylic acid, 2-ethyl acrylic acid, or combinations thereof and, most preferably, is methacrylic acid. (As used herein, (meth)acrylic acid refers to either acrylic acid or methacrylic acid.)

### Succinimide Dispersant

The electric motor lubricating fluids herein also contain at least one oil-soluble ashless dispersant that is a succinimide dispersant derived from a hydrocarbyl-substituted dicarboxylic acid or anhydride reacted with a polyalkylene polyamine having at least one secondary amine and wherein at least a portion of the secondary amines of the dispersant is post-treated with a select capping agent. Suitable succinimide dispersants and their preparation are disclosed in at least US 7,897,696 and/or US 4,234,435, which are incorporated herein by reference. In embodiments, the succinimide dispersant is a reaction product obtained by (i) reacting a hydrocarbyl-substituted dicarboxylic acid or anhydride with a polyalkylene polyamine to form an intermediate having at least one secondary amine and (ii) reacting the at least one secondary amine (or more) with a capping agent selected from one or more of C6 or greater alkyl halide, acetic anhydride, and/or phenyl isocyanate. As discussed more below, the selected capping agents form alkyl capping groups, acetyl capping groups, and/or unsubstituted anilide capping groups on the succinimide obtained from the respective capping agent.

In one embodiment, the hydrocarbyl-substituent of the succinimide dispersants herein has a number average molecular weight of about 500 to about 5000, about 500 to about 2500 and, in one approach of this embodiment, is preferably derived from a polyisobutylene having a number average molecular weight of about 900 to about 2500, in another approach of this embodiment, preferably derived from a polyisobutylene having a number average molecular weight of about 900 to about 1200 or, in further embodiments, about 2000 to about 2500. In any approach or embodiment herein, the hydrocarbyl moiety of the hydrocarbyl-dicarboxylic acid or anhydride of may be derived from butene polymers, for example, polymers of isobutylene. Suitable polyisobutylenes for use herein include those formed from conventional polyisobutylene (e.g., PIB with less than 50 mol%, less than 40 mol%, less than 30 mol%, less than 20 mol%, or less than 10 mol% content of terminal double bonds) or, alternatively, highly-reactive polyisobutylene (e.g., HR-PIB greater than 50 mol%, greater than 60 mol%, greater than 70 mol%, greater than 80 mol%, or greater than 90 mol% content of terminal double bonds or terminal vinylidene content). Suitable polyisobutylenes may include those prepared using BF₃ catalysts. As noted below, molecular weight may be determined by gel permeation chromatography (GPC) using polystyrene (with a number average molecular weight of 180 to about 18,000) as the calibration reference. The GPC method additionally provides average weight molecular weight distribution information; see, for example, W. W. Yau, J. J. Kirkland and D. D. Bly, "Modern Size Exclusion Liquid Chromatography", John Wiley and Sons, New York, 1979, also incorporated herein by reference.

The polyisobutylene moiety of any embodiment in the dispersants herein may also have a molecular weight distribution (MWD), also referred to as polydispersity index (PDI), as determined by the ratio of weight average molecular weight (Mw) to number average molecular weight (Mn). In some approaches or embodiments, suitable polyisobutylene moieties may have a Mw/Mn of less than about 3.0, or less than about 2.8, or less than about 2.5, and in other approaches, suitable polyisobutylene substituents have a polydispersity of from about 1.5 to about 3.0, or from about 1.5 to about 2.5.

The dicarboxylic acid or anhydride suitable to form the dispersants herein may be selected from carboxylic reactants such as maleic anhydride, maleic acid, fumaric acid, malic acid, tartaric acid, itaconic acid, itaconic anhydride, citraconic acid, citraconic anhydride, mesaconic acid, ethylmaleic anhydride, dimethylmaleic anhydride, ethylmaleic acid, dimethylmaleic acid, hexylmaleic acid, and the like, including the corresponding acid halides and C₁-C₄ aliphatic esters. In some approaches, a mole ratio of dicarboxylic acid or anhydride to hydrocarbyl moiety in a reaction mixture used to make the hydrocarbyl-dicarboxylic acid or anhydride may vary widely. Accordingly, the charge mole ratio may vary from 5:1 to 1:5, for example from 3:1 to 1:3. In some embodiments, a particularly suitable molar ratio of acid or anhydride to hydrocarbyl moiety is from 1:1 to less than 1.6:1. In other embodiments, another useful charge molar ratio of dicarboxylic acid or anhydride to hydrocarbyl moiety may be 1:1 to 1.5:1, or 1:1 to 1.4:1, or 1.1:1 to 1.3:1, or 1:1 to 1.2:1.

Any numerous polyalkylene polyamines can be used in preparing the
dispersant additives herein. Non-limiting exemplary polyamines may include aminoguanidine bicarbonate (AGBC), diethylene triamine (DETA), triethylene tetramine (TETA), tetraethylene pentamine (TEPA), pentaethylene hexamine (PEHA) and/or polyamine bottoms (e.g., heavy polyamines). A typical heavy polyamine may comprise a mixture of polyalkylenepolyamines having small amounts of polyamine oligomers such as TEPA and PEHA, but primarily oligomers having seven or more nitrogen atoms, two or more primary amines per molecule, and more extensive branching than conventional polyamine mixtures. Typically, these heavy polyamines have an average of 6.5 nitrogen atoms per molecule. Preferably, the mixture of polyalkylenepolyamines has an average of 5 to 12 nitrogen atoms, preferably at least 6 or about 6.5 nitrogen atoms per molecule Additional non-limiting polyamines which may be used to prepare the hydrocarbyl-substituted succinimide dispersant are disclosed in US 6,548,458, the disclosure of which is incorporated herein by reference in its entirety. In some embodiments, the charge molar ratio of hydrocarbyl-dicarboxylic acid or anhydrides to polyalkylene polyamines may be from about 1:1 to about 3.0:1. In one embodiment, the dispersants in the present disclosure described herein may be the reaction product of a polyisobutenyl succinic anhydride (PIBSA), and a polyamine, for example heavy polyamines wherein the charge molar ratio of the polyisobutenyl-substituted succinic anhydride to the polyamine of about 1.7:1 to about 2.5:1.

As noted above, embodiments of the succinimide dispersants suitable for the electric motor lubricating fluids herein are post treated with select capping agents and, in particular, wherein secondary amine(s) of the succinimide dispersants are post-treated with the select capping agent. As shown in the Examples below, non-capped succinimide dispersants do not provide suitable performance in the context of corrosion and extreme pressure performance. Suitable post-treat capping agents for dispersants that achieve performance in the context of lubricants for electric and hybrid-electric vehicles that also include ashless dialkyl dithiophosphoric acids include acetic anhydride, unsubstituted phenyl isocyanate, and/or C6 or greater (preferably C8) alkyl halides such as octyl halides like octyl bromide and the like. As shown in the Examples, other capping agents do not achieve the desired copper leaching, extreme pressure, and/or electrical conductivity performance in the context of fluids also having ashless dialkyl dithiophosphoric acid. The capping agents herein, as noted above, are also substantially boron-free and phosphorus-free.

In embodiments, the process of post-treating any embodiment of the dispersants herein includes first forming the succinimide product, as described above, and then further reacting the succinimide product with the selected post treating agent. In some cases, the dispersants herein may be post-treated with more than one of the noted post-treatment agents as needed for various embodiments. The formed capped or post-treated dispersants, in some embodiments, include mono- or bis-succinimide dispersants having amine substitution (from post-treatment) from one or more of a C6 or greater alkyl group (derived from the alkyl halide capping agent), an acetyl group (derived from acetic anhydride capping agent), and/or unsubstituted anilide groups (derived from the phenyl isocyanate capping agent).

In embodiments, examples of suitable dispersants herein include those of Formula III: 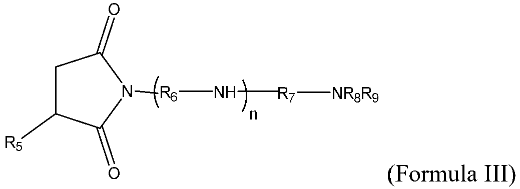 wherein R₅ of Formula III may be a hydrocarbyl radical as described above having a molecular weight of about 500 to about 5000 (or any other range as noted above), R₆ of Formula III may be a divalent C₁-C₆ alkylene, R₇ of Formula III may be a divalent C₁-C₆ alkylene, each of R₈ and R₉ of Formula III, independently, may be H, C₁-C₆ alkyl, or, together with the N to which they are attached to, form a 5- or 6- membered ring (e.g., such as Formula IV below), and n may be an integer of 0, 1, 2, 3, 4, 5, 6, 7, or 8. When R₈ and R₉ of Formula III, together with the N to which they are attached to, form a 5- or 6- membered ring, then such moiety have a structure of Formula IV below:

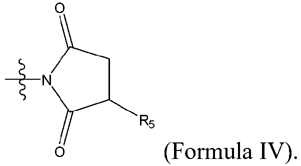

At least a portion (and in some embodiments up to all) of the secondary nitrogen atoms of Formula III above are capped (e.g., post-treated to form amine substitution) with the moieties below wherein the ~ represents a bond to the nitrogen atom. Formula VIa represents anilide capping derived from a phenyl isocyanate capping agent; Formula VIb represents acetyl capping derived from acetic anhydride capping agent; and Formula VIc represents alkyl capping derived from an alkyl halide capping agent with w being an integer of 4 or greater (preferably 4 to 10, or 6 to 8, and most preferably 6):

| | | |
|---|---|---|
| 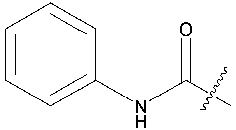 | 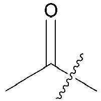 | 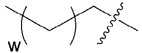 |
| (Formula VIa) | (Formula VIb) | (Formula VIc) |

In approaches, the dispersants as described herein may be used in the lubricating composition in amounts from about 0.5 weight percent to about 2.0 weight percent, or about 0.75 weight percent to about 1.5 weight percent, about 0.9 weight percent to 1.25 weight percent, or about 0.9 weight percent to about 1.0 weight percent, based upon the final weight of the lubricating oil composition. In yet another embodiment, the succinimide dispersants of the electric motor lubricating fluids herein preferably has about 0.5 to about 2.5 wt% of nitrogen and provides about 70 to about 300 ppm of nitrogen to the lubricants (in other approaches, about 80 to about 250 ppm of nitrogen from the dispersant, or about 150 to about 300 ppm of nitrogen from the dispersant).

### Detergent

The electric motor lubricating fluids herein may also include one or more optional detergents. In one embodiment, the detergent is one or more neutral, low-based, or overbased sulfonate detergents (preferably calcium sulfonate detergents) having a total base number (TBN) of about 450 or less (preferably about 0 to about 450) and provided in amounts to the electric motor lubricating fluids to contribute a TBN of about 3 to about 50 to the electric motor lubricating fluid (in other approaches, a TBN of about 3 to about 30, about 3 to about 10, about 3 to about 8, or about 3 to about 5) and with TBN measured pursuant to ASTM D2896. Suitable detergents and their methods of preparation are described, for instance, in greater detail in numerous patent publications, including US 7,732,390; US 4,165,291, and/or US 4,206,062 (and references cited therein), which are incorporated herein by reference.

As used herein, a low-based to neutral detergent additive may have a total base number (TBN) of less than about 200 mg KOH/gram (preferably, less than about 100, less than about 50, or less than about 30, and may be about 0 to about 200), and an overbased detergent may have a total base number (TBN) of about 200 mg KOH/gram or greater, or about 250 mg KOH/gram or greater, or about 300 mg KOH/gram or greater, or about 375 mg KOH/gram or greater, or about 400 mg KOH/gram or greater (with TBN measured by ASTM D2896) (in other embodiments, about 200 to about 450 or other ranges therein). In other embodiments, an overbased detergent may have a metal-to-substrate ratio of from 1.1:1 or less, or from 2:1 or less, or from 4:1 or less, or from 5:1 or less, or from 7:1 or less, or from 10:1 or less, or from 12:1 or less, or from 15:1 or less, or from 20:1 or less.

In embodiments, suitable detergent substrates (preferably, sulfonate detergents) may be salted with an alkali or alkaline earth metal, which are preferably calcium and/or magnesium and most preferably calcium. Thus, suitable detergents herein may include alkali or alkaline earth metal salts of petroleum sulfonic acids and long chain mono- or di-alkylarylsulfonic acids with the aryl group being benzyl, tolyl, and xylyl. Examples of suitable detergents discovered to facilitate effective performance of the tolyltriazole corrosion inhibitor and the oil-soluble_ashless dialkyl dithiophosphoric acid extreme pressure additive include calcium sulfonates, and/or magnesium sulfonates, and preferably calcium sulfonates.

Overbased detergent additives are also well known in the art and generally include alkali or alkaline earth metal overbased detergent additives. Such detergent additives may be prepared by reacting a metal oxide or metal hydroxide with a substrate and carbon dioxide gas. The substrate is typically an acid, for example in the context of the lubricants herein, an acid such as an aliphatic substituted sulfonic acid. The terminology "overbased" relates to metal salts, such as metal salts of sulfonates for the fluids herein, wherein the amount of metal present exceeds the stoichiometric amount. Such salts may have a conversion level in excess of 100% (i.e., they may comprise more than 100% of the theoretical amount of metal needed to convert the acid to its "normal," "neutral" salt). The expression "metal ratio," often abbreviated as MR, is used to designate the ratio of total chemical equivalents of metal in the overbased salt to chemical equivalents of the metal in a neutral salt according to known chemical reactivity and stoichiometry. In a normal or neutral salt, the metal ratio is one and in an overbased salt, MR, is greater than one. They are commonly referred to as overbased, hyperbased, or superbased salts and may be salts of organic sulfur acids.

When such detergent compositions are formed in an inert diluent, e.g. a process oil, usually a mineral oil, the total base number reflects the basicity of the overall composition including diluent, and any other materials (e.g., promoter, etc.) that may be contained in the detergent composition.

Preferably, detergents herein are neutral, low-based, or overbased calcium sulfonate detergents and wherein the detergents provide about 10 to about 250 ppm of metal (in other embodiments, about 20 to about 200 ppm of metal, about 25 to about 160 ppm of metal or about 30 or about 100 ppm of metal). The detergent metal may be calcium, magnesium, and/or sodium, but is preferably calcium. Preferably, the detergents are neutral to low-based calcium sulfonates.

### Antioxidant

The methods and the lubricating compositions herein may, in some embodiments, also include optional antioxidant compounds (or blends thereof) including one or more phenolic antioxidant compounds, one or more aminic antioxidant compounds, or combinations thereof. In some embodiments, for instance, the methods and lubricating compositions herein include both one or more phenolic antioxidant compounds and one or more aminic antioxidant compounds. Preferably, the electric motor lubricating fluids including at least an aminic antioxidant.

In one approach or embodiment, the aminic antioxidants may include, but are not limited to, antioxidants selected from aromatic amines, alkylated diphenylamines, phenyl-α-napthylamines, alkylated phenyl-α-naphthylamines, hindered non-aromatic amines, and the like, or combinations thereof. In some approaches, the methods and lubricating compositions herein may include up to about 0.8 weight percent, preferably 0.05 to 0.7 weight percent of the aminic antioxidant, or in other more preferred embodiments, about 0.6 to about 0.4 weight percent of the aminic antioxidant.

In some approaches, the aminic antioxidant may be one or more aromatic amine antioxidants and may include, but are not limited to, diarylamines having the formula: 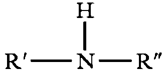 wherein R' and R" of the above formula each independently represents a substituted or unsubstituted aryl group having from 6 to 30 carbon atoms. If substituted, suitable substituents for the aryl group of R' and R" include aliphatic hydrocarbon groups such as alkyl having from 1 to 30 carbon atoms, hydroxy groups, halogen radicals, carboxylic acid or ester groups, or nitro groups. The aryl group may be substituted or unsubstituted phenyl or naphthyl, particularly wherein one or both of the aryl groups are substituted with at least one alkyl having from 4 to 30 carbon atoms, preferably from 4 to 18 carbon atoms, most preferably from 4 to 9 carbon atoms. In approaches, one or both aryl groups may be substituted, e.g. mono-alkylated diphenylamine, di-alkylated diphenylamine, C9 alkylated diphenyl amines, or mixtures of mono- and di-alkylated diphenylamines.

Examples of diarylamine antioxidants that may be used include, but are not limited to: diphenylamine; various alkylated diphenylamines, 3-hydroxydiphenylamine, N-phenyl-1,2-phenylenediamine, N-phenyl-1,4-phenylenediamine, monobutyldiphenyl-amine, dibutyl-diphenylamine, monooctyldiphenylamine, dioctyldiphenylamine, monononyl-diphenylamine, dinonyldiphenylamine, monotetradecyldiphenylamine, ditetradecyl-diphenylamine, phenyl-alpha-naphthylamine, monooctyl phenyl-alpha-naphthylamine, phenyl-beta-naphthylamine, monoheptyldiphenylamine, diheptyl-diphenylamine, p-oriented styrenated diphenylamine, mixed butyloctyldiphenylamine, and mixed octylstyryl-diphenylamine.

The compositions herein may also include optional phenolic antioxidants. Suitable phenolic or hindered phenolic antioxidants may contain a secondary butyl and/or a tertiary butyl group as a sterically hindering group. The phenol group may be further substituted with a hydrocarbyl group and/or a bridging group linking to a second aromatic group. Examples of suitable phenolic or hindered phenol antioxidants include 2,6-di-tert-butylphenol, 4-methyl-2,6-di-tert-butylphenol, 4-ethyl-2,6-di-tert-butylphenol, 4-propyl-2,6-di-tert-butylphenol or 4-butyl-2,6-di-tert-butylphenol, or 4-dodecyl-2,6-di-tert-butylphenol. In one embodiment the hindered phenol antioxidant may be an ester and may include, for instance, Irganox^{™} L-135 available from BASF or an addition product derived from 2,6-di-tert-butylphenol and an alkyl acrylate, wherein the alkyl group may contain about 1 to about 18, or about 2 to about 12, or about 2 to about 8, or about 2 to about 6, or about 4 carbon atoms. Another commercially available hindered phenol antioxidant may be an ester and may include Ethanox^{™} 4716 available from Albemarle Corporation. In some approaches, the methods and lubricating compositions herein may include, if used, up to about 0.8 weight percent of the phenolic antioxidant, or in other embodiments, up to about 0.6, or up to about 0.4 weight percent of the phenolic antioxidant.

### Base Oil:

The electric motor lubricating fluids herein include one or more base oils having a lubricating viscosity. Base oils suitable for use in formulating the electric motor lubricating fluids for use in electric and/or hybrid-electric motor vehicles according to the disclosure may be selected from any of suitable synthetic or natural oils or mixtures thereof having a suitable lubricating viscosity. Natural oils may include animal oils and vegetable oils (e.g., castor oil, lard oil) as well as mineral oils such as liquid petroleum oils and solvent treated or acid-treated mineral lubricating oils of the paraffinic, naphthenic or mixed paraffinic-naphthenic types. Oils derived from coal or shale may also be suitable. Further, oil derived from a gas-to-liquid process is also suitable. The base oil may have a kinematic viscosity at 100°C (e.g. kV100) of about 2 to about 15 cSt, as measured by ASTM D2270-10.

The base oil as used in the invention described herein may be a single base oil or may be a mixture of two or more base oils. The one or more base oil(s) may be selected from any of the base oils in Groups III or IV as specified in the American Petroleum Institute (API) Base Oil Interchangeability Guidelines. Such base oil groups are shown in Table 1 as follows:

**Table 1**

| Base oil Category | Sulfur (%) | | Saturates (%) | Viscosity Index |
|---|---|---|---|---|
| API Group I | > 0.03 | and/or | <90 | 80 to 120 |
| API Group II | ≤0.03 | and | ≥90 | 80 to 120 |
| API Group III | ≤0.03 | and | ≥90 | ≥120 |
| API Group IV | All polyalphaolefins (PAOs) | | | |
| API Group V | All others not included in Groups I, II, III, or IV | | | |

In one embodiment, the base oil may be selected from an API GII base oil, an API Group III base oil, or an API Group IV base oil, or a mixture of these base oils. Alternatively, the base oil may be a mixture of two or more of an API Group II base oils, two or more API GIII base oils, or two or more of an API Group IV base oils.

API Group III base oils may include oil derived from Fischer-Tropsch synthesized hydrocarbons. Fischer-Tropsch synthesized hydrocarbons are made from synthesis gas containing H₂ and CO using a Fischer-Tropsch catalyst. Such hydrocarbons typically require further processing in order to be useful as the base oil. These types of oils are commonly referred to as gas-to-liquids (GTLs). For example, the hydrocarbons may be hydroisomerized using processes disclosed in U.S. Pat. No. 6,103,099 or 6,180,575; hydrocracked and hydroisomerized using processes disclosed in U.S. Pat. No. 4,943,672 or 6,096,940; dewaxed using processes disclosed in U.S. Pat. No. 5,882,505; or hydroisomerized and dewaxed using processes disclosed in U.S. Pat. Nos. 6,013,171; 6,080,301; or 6,165,949.

API Group IV base oils, PAOs, are typically derived from monomers having from 4 to 30, or from 4 to 20, or from 6 to 16 carbon atoms. Examples of PAOs that may be used in the present invention include those derived from octene, decene, mixtures thereof, and the like. PAOs may have a kinematic viscosity of from 2 to 15, or from 3 to 12, or from 4 to 8 cSt at 100°C, as measured by ASTM D2270-10. Examples of PAOs include 4 cSt at 100°C PAOs, 6 cSt at 100°C PAOs, and mixtures thereof.

The base oil(s) are combined with an additive composition as disclosed in embodiments herein to provide a lubricating and cooling fluid for use in an electric motor system having an electric motor, gears, and clutches. Accordingly, the base oil may be present in the lubricating and cooling fluid in an amount greater than about 80 wt % based on the total weight of the lubricating and cooling fluid. In some embodiments, the base oil may be present in the lubricating and cooling fluid in an amount greater than about 85 wt % based on the total weight of the lubricating and cooling fluid.

### Other Additives

The electric motor lubricating fluid described herein may also include other additives of the type used in electric motor lubricating fluid compositions in addition to the components described above. However, as noted above, the electric motor lubricating fluids are substantially free of corrosion inhibitors. In embodiments, the electric motor lubricating fluids herein are substantially free of corrosion inhibitor additives selected from substituted or unsubstituted benzotriazole or triazole compounds, tolyltriazole compounds, corrosion inhibitors derived from monocarboxylic or polycarboxylic acids, alkenyl succinic acid or anhydride corrosion inhibitors, corrosion inhibitors derived from ether amines, acid phosphates, polylethoxylated compounds, imidazolines, or combinations thereof.

Such optional additives include, but are not limited to, additional antioxidant(s), viscosity modifier(s), phosphorus-containing components, antifoam agent(s), demulsifier(s), pour point depressant(s), seal swell agent(s), friction modifier(s), and sulfur-containing component(s).

**ANTIOXIDANTS:** In some embodiments, the electric motor lubricating fluid contains one or more other antioxidants. In addition to the antioxidants previously discussed, suitable other antioxidants include sulfur containing antioxidants, and organic phosphites, among others.

The sulfur containing antioxidants include, but are not limited to, sulfurized olefins that are characterized by the type of olefin used in their production and the final sulfur content of the antioxidant. High molecular weight olefins, i.e., those olefins having an average molecular weight of 168 to 351 g/mole, are preferred. Examples of olefins that may be used include alpha-olefins, isomerized alpha-olefins, branched olefins, cyclic olefins, and combinations of these.

Alpha-olefins include, but are not limited to, any C₄ to C₂₅ alpha-olefins. Alpha-olefins may be isomerized before the sulfurization reaction or during the sulfurization reaction. Structural and/or conformational isomers of the alpha olefin that contain internal double bonds and/or branching may also be used. For example, isobutylene is a branched olefin counterpart of the alpha-olefin 1-butene.

Sulfur sources that may be used in the sulfurization reaction of olefins include: elemental sulfur, sulfur monochloride, sulfur dichloride, sodium sulfide, sodium polysulfide, and mixtures of these added together or at different stages of the sulfurization process.

Unsaturated oils, because of their unsaturation, may also be sulfurized and used as an antioxidant. Examples of oils or fats that may be used include corn oil, canola oil, cottonseed oil, grapeseed oil, olive oil, palm oil, peanut oil, coconut oil, rapeseed oil, safflower seed oil, sesame seed oil, soybean oil, sunflower seed oil, tallow, and combinations of these.

In some embodiments, the total amount of antioxidant in the lubricating fluids described herein may be present in an amount to deliver up to about 200 ppm nitrogen, or in the range of 0 or 50 to about 150 ppm nitrogen, or about 100 to about 150 ppm nitrogen.

**FRICTION MODIFIERS:** In some embodiments, the electric motor lubricating fluid contains friction modifiers. Suitable additional friction modifiers may comprise metal containing and metal-free friction modifiers and may include, but are not limited to, imidazolines, amides, amines, succinimides, alkoxylated amines, alkoxylated ether amines, amine oxides, amidoamines, nitriles, betaines, quaternary amines, imines, amine salts, amino guanidine, alkanolamides, phosphonates, metal-containing compounds, glycerol esters, sulfurized fatty compounds and olefins, sunflower oil other naturally occurring plant or animal oils, dicarboxylic acid esters, esters or partial esters of a polyol and one or more aliphatic or aromatic carboxylic acids, and the like.

Suitable friction modifiers may contain hydrocarbyl groups that are selected from straight chain, branched chain, or aromatic hydrocarbyl groups or mixtures thereof, and such hydrocarbyl groups may be saturated or unsaturated. The hydrocarbyl groups may be composed of carbon and hydrogen or hetero atoms such as sulfur or oxygen. The hydrocarbyl groups may range from 12 to 25 carbon atoms. In some embodiments the friction modifier may be a long chain fatty acid ester. In another embodiment the long chain fatty acid ester may be a monoester, or a di-ester, or a (tri)glyceride. The friction modifier may be a long chain fatty amide, a long chain fatty ester, a long chain fatty epoxide derivative, or a long chain imidazoline.

Other suitable friction modifiers may include organic, ashless (metal-free), nitrogen-free organic friction modifiers. Such friction modifiers may include esters formed by reacting carboxylic acids and anhydrides with alkanols and generally include a polar terminal group (e.g. carboxyl or hydroxyl) covalently bonded to an oleophilic hydrocarbon chain. An example of an organic ashless nitrogen-free friction modifier is known generally as glycerol monooleate (GMO) which may contain mono-, di-, and tri-esters of oleic acid. Other suitable friction modifiers are described in U.S. Pat. No. 6,723,685.

Aminic friction modifiers may include amines or polyamines. Such compounds can have hydrocarbyl groups that are linear, either saturated or unsaturated, or a mixture thereof and may contain from 12 to 25 carbon atoms. Further examples of suitable friction modifiers include alkoxylated amines and alkoxylated ether amines. Such compounds may have hydrocarbyl groups that are linear, either saturated, unsaturated, or a mixture thereof. They may contain from about 12 to about 25 carbon atoms. Examples include ethoxylated amines and ethoxylated ether amines.

The amines and amides may be used as such or in the form of an adduct or reaction product with a boron compound such as a boric oxide, boron halide, metaborate, boric acid or a mono-, di- or tri-alkyl borate. Other suitable friction modifiers are described in U.S. Pat. No. 6,300,291.

If the additional friction modifiers contain nitrogen, such additional friction modifiers may be present in the lubricating fluids in any amount as long as the performance requirements are not compromised.

**VISCOSITY MODIFIERS:** The electric motor lubricating fluid may optionally contain one or more viscosity modifiers. Suitable viscosity modifiers may include polyolefins, olefin copolymers, ethylene/propylene copolymers, polyisobutenes, hydrogenated styreneisoprene polymers, styrene/maleic ester copolymers, hydrogenated styrene/butadiene copolymers, hydrogenated isoprene polymers, alpha-olefin maleic anhydride copolymers, polymethacrylates, polyacrylates, polyalkyl styrenes, hydrogenated alkenyl aryl conjugated diene copolymers, or mixtures thereof. Viscosity modifiers may include star polymers and suitable examples are described in US Publication No. 2012/0101017 A1.

The electric motor lubricating fluid described herein also may optionally contain one or more dispersant viscosity modifiers in addition to a viscosity modifier or in lieu of a viscosity modifier. Suitable dispersant viscosity modifiers may include functionalized polyolefins, for example, ethylene-propylene copolymers that have been functionalized with the reaction product of an acylating agent (such as maleic anhydride) and an amine; polymethacrylates functionalized with an amine, or esterified maleic anhydride-styrene copolymers reacted with an amine.

The total amount of viscosity modifier and/or dispersant viscosity modifier, when present, may be up to about 2.0 wt%, or up to about 1.5 wt%, or up to about 0.5 wt% based on the total weight of the lubricating fluids.

**DEMULSIFIERS:** Demulsifiers include trialkyl phosphates, and various polymers and copolymers of ethylene glycol, ethylene oxide, propylene oxide, or mixtures thereof, including polyethylene oxides, polypropylene oxides and (ethylene oxide-propylene oxide) polymers. When present, the amount of demulsifier in the lubricating and cooling fluid may be up about 0.05 wt, or up to about 0.02 wt%, or below about 0.015 wt% based on the total weight of the lubricating fluids.

**ANTIFOAM AGENTS:** Antifoam agents used to reduce or prevent the formation of stable foam include silicones, polyacrylates, or organic polymers. Foam inhibitors that may be useful in the compositions of the disclosed invention include polysiloxanes, copolymers of ethyl acrylate and 2-ethylhexylacrylate and optionally vinyl acetate. When present, the amount of antifoam in the lubricating and cooling fluid may be up about 0.1 wt, or up to about 0.05 wt%, or below about 0.04 wt% based on the total weight of the lubricating fluids.

**POUR POINT DEPRESSANTS:** The electric motor lubricating fluid may optionally contain one or more pour point depressants. Suitable pour point depressants may include esters of maleic anhydride-styrene, polymethacrylates, polymethylmethacrylates, polyacrylates or polyacrylamides or mixtures thereof. Pour point depressants, when present, may be present in amount from about 0.001 wt% to about 0.04 wt%, based upon the total weight of the lubricant.

In general terms, lubricating fluids described herein may include additive components in the ranges listed in Table 2.

**TABLE 2**

| Component | (Suitable Embodiments) | (Preferred Embodiments) |
|---|---|---|
| Oil-soluble Phosphorus Extreme Pressure Additive, wt% | 0.04 - 0.10 | 0.06 - 0.08 |
| Capped Succinimide Dispersant(s), wt% | 0.5 - 3.0 | 0.75 - 1.5 |
| Sulfonate Detergent(s), wt% | 0.05 - 0.5 | 0.1 - 0.3 |
| Antioxidant(s), wt% | 0.1 - 0.6 | 0.3 - 0.5 |
| Antifoaming agent(s), wt% | 0 - 0.05 | 0.1 - 0.04 |
| Viscosity index improver(s), wt% | 0 - 7.0 | 0 - 5.0 |
| Base oil(s) | Balance | Balance |
| Total | 100 | 100 |

The percentages of each component above represent the weight percent of each component, based upon the total weight of the lubricating fluids containing the recited component. Additives used in formulating the compositions described herein may be blended into the base oil individually or in various sub-combinations. However, it may be suitable to blend all of the components concurrently using an additive concentrate (i.e., additives plus a diluent, such as a hydrocarbon solvent). The use of an additive concentrate takes advantage of the mutual compatibility afforded by the combination of ingredients when in the form of an additive concentrate. Also, the use of a concentrate reduces blending time and lessens the possibility of blending errors.

In various embodiments, the electric motor lubricating fluids herein achieve a Failure Load Stage (e.g., FLS) of at least 8 in the FZG A10/16.6R/120 scuffing test of ASTM D5182, have about 100 ppm or less of copper leaching when measured pursuant to ASTM D130-19 (e.g., a half-submerged copper strip heated to 150°C for 168 hours); and achieve an electrical conductivity using a modified conductivity test pursuant to ASTM D2624-15 using the electric motor lubricating fluid and measured at 20 Hz and at 100°C of less than 25 nS/M. It was surprising that selecting the capping agent of the dispersant aided in achieving performance in the context of electric motor lubricating fluids also including an ashless dialkyl dithiophosphoric acid.

### Selected Definitions:

Unless the context of discussion herein suggests otherwise, the following definitions of terms are provided in order to clarify the meanings of certain terms as used herein.

The terms "lubricating oil," "lubricant composition," "lubricating composition," "lubricant" and "electric motor lubricating fluid" and "lubricating fluid" refer to a finished lubrication product comprising a major amount of a base oil plus a minor amount of an additive composition. As used herein, a "major amount" includes at least 50 weight percent (at least 60 weight percent, at least 70 weight percent, at least 80 weight percent, at least 90 weight percent) and a "minor amount" includes less than 50 weight percent.

As used herein, the terms "additive package," "additive concentrate," and "additive composition," refer the portion of the lubricating oil composition excluding the major amount of base oil.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having a predominantly hydrocarbon character. Each hydrocarbyl group is independently selected from hydrocarbon substituents, and substituted hydrocarbon substituents containing one or more of halo groups, hydroxyl groups, alkoxy groups, mercapto groups, nitro groups, nitroso groups, amino groups, pyridyl groups, furyl groups, imidazolyl groups, oxygen and nitrogen, and wherein no more than two non-hydrocarbon substituents are present for every ten carbon atoms in the hydrocarbyl group.

As used herein, the term "percent by weight" or "wt%", unless expressly stated otherwise, means the percentage the recited component represents to the weight of the entire composition.

The terms "soluble," "oil-soluble," or "dispersible" used herein may, but does not necessarily, indicate that the compounds or additives are soluble, dissolvable, miscible, or capable of being suspended in the oil in all proportions. The foregoing terms do mean, however, that they are, for instance, soluble, suspendable, dissolvable, or stably dispersible in oil to an extent sufficient to exert their intended effect in the environment in which the oil is employed. Moreover, the additional incorporation of other additives may also permit incorporation of higher levels of a particular additive, if desired.

The term "alkyl" as employed herein refers to straight, branched, cyclic, and/or substituted saturated chain moieties from about 1 to about 200 carbon atoms.

The term "alkenyl" as employed herein refers to straight, branched, cyclic, and/or substituted unsaturated chain moieties from about 3 to about 30 carbon atoms.

The term "aryl" as employed herein refers to single and multi-ring aromatic compounds that may include alkyl, alkenyl, alkylaryl, amino, hydroxyl, alkoxy, halo substituents, and/or heteroatoms including, but not limited to, nitrogen, and oxygen.

As used herein, the "average number molecular weight" or "Mn" is determined by gel permeation chromatography (GPC) using commercially available polystyrene standards (with a Mn of about 180 to about 18,000 as the calibration reference). For instance, he molecular weight (Mn) for any embodiment herein may be determined with a gel permeation chromatography (GPC) instrument obtained from Waters or the like instrument and the data processed with Waters Empower Software or the like software. The GPC instrument may be equipped with a Waters Separations Module and Waters Refractive Index detector (or the like optional equipment). The GPC operating conditions may include a guard column, 4 Agilent PLgel columns (length of 300×7.5 mm; particle size of 5 µ, and pore size ranging from 100-10000 Å) with the column temperature at about 40 °C. Un-stabilized HPLC grade tetrahydrofuran (THF) may be used as solvent, at a flow rate of 1.0 mL/min. The GPC instrument may be calibrated with commercially available polystyrene (PS) standards having a narrow molecular weight distribution ranging from 500 - 380,000 g/mol. The calibration curve can be extrapolated for samples having a mass less than 500 g/mol. Samples and PS standards can be in dissolved in THF and prepared at concentration of 0.1-0.5 weight percent and used without filtration. GPC measurements are also described in US 5,266,223, which is incorporated herein by reference. The GPC method additionally provides molecular weight distribution information; *see*, *for example,* W. W. Yau, J. J. Kirkland and D. D. Bly, "Modern Size Exclusion Liquid Chromatography", John Wiley and Sons, New York, 1979, also incorporated herein by reference.

Unless otherwise noted, Total Base Number (TBN) is measured pursuant to ASTM D2896.

It is to be understood that throughout the present disclosure, the terms "comprises," "includes," "contains," etc. are considered open-ended and include any element, step, or ingredient not explicitly listed. The phrase "consists essentially of" is meant to include any expressly listed element, step, or ingredient and any additional elements, steps, or ingredients that do not materially affect the basic and novel aspects of the invention. The present disclosure also contemplates that any composition described using the terms, "comprises," "includes," "contains," is also to be interpreted as including a disclosure of the same composition "consisting essentially of" or "consisting of" the specifically listed components thereof.

### EXAMPLES

A better understanding of the present disclosure and its many advantages may be clarified with the following examples. The following examples are illustrative and not limiting thereof in either scope or spirit. Those skilled in the art will readily understand that variations of the components, methods, steps, and devices described in these examples can be used. Unless noted otherwise or apparent from the context of discussion in the Example below and throughout this disclosure, all percentages, ratios, and parts noted in this disclosure are by weight. Any standardized test method noted in the Examples, disclosure, or claims, unless apparent from the context of its use, refers to the version of the test method publicly available at the time of the filing of the present disclosure.

FZG Scuffing was used to evaluate the scuffing load capacity of the lubricants and was performed according to the A10/16.6R/120 test of ASTM D5182. Results are reported in Failure Load Stage (FLS), and better results are obtained for samples with a higher FLS. Preferably, a FLS of 8 or above is desired.

Copper leaching into the lubricating composition was determined via ICP using a modified procedure of ASTM D130-19 (using a half-submerged copper strip and heated to about 150°C for about 168 hours). It is preferred that less than 100 ppm copper is leached into the fluid after testing.

Electrical conductivity was measured using a modified conductivity test pursuant to ASTM D2624-15 using the electric motor lubricating fluid and measured at 20 Hz and at 100°C. It is preferred that the lubricants exhibit an electrical conductivity of less than 25 nS/M at 100°C.

### EXAMPLE 1

Uncapped succinimide dispersants A to D were prepared and evaluated for extreme pressure performance. Dispersants A to D were succinimides obtained from reacting polyisobutylene (PIB) with maleic anhydride to form a PIB succinic anhydride or acid and further reacting the PIB succinic anhydride or acid with a polyalkylene polyamine as generally described in US 7,897,696 or US 4,234,435. The dispersants were not further reacted with any post-treatment capping agents. The polyalkylene polyamine was a polyamine bottoms product (e.g., a heavy polyamine) including a mixture of polyalkylene polyamines comprising small amounts of lower polyamine oligomers, such as TEPA (tetraethylene pentaamine) and PEHA (pentaethylene hexamine), but primarily oligomers with 6 or more nitrogen atoms, 2 or more primary amines per molecule, and more extensive branching than conventional polyamine mixtures. Dispersants C and D included a polyisobutylene substituent of the dispersant being a highly-reactive PIB having more than 90 mol% content of terminal double bonds. Table 3 below illustrates Samples 2 to 5 each containing about 1 wt% of the indicated uncapped dispersant and the same additive package having the same antifoam, process oil, aminic antioxidant, neutral calcium sulfonate detergent (TBN of approximately 28), ashless dialkyl dithiophosphoric acid antiwear additive and blended in an API Group II/III base oil mix. Sample 1 contains only the additive package blended in the API Group II/III base oil mix but contains no dispersant. Results for FZG Scuffing are provided in Table 3 below.

**Table 3: Lubricants including Uncapped Dispersants**

| **Sample** | **Dispersant** | **Dispersant N (ppm)¹** | **FLS** |
|---|---|---|---|
| 1 - Baseline | - | - | 7 |
| 2 | A² | 210 | 5 |
| 3 | B³ | 75 | 6 |
| 4 | C⁴ | 208 | 7 |
| 5 | D⁵ | 80 | 5 |

| | | | |
|---|---|---|---|
| 1 Calculated nitrogen ppm delivered to the fluid from the dispersant 2 Dispersant A is derived from 1000 Mn conventional PIB having less than 10 mol% content of terminal double bonds 3 Dispersant B is derived from 2000 Mn conventional PIB having less than 10 mol% content of terminal double bonds 4 Dispersant C is derived from 1000 Mn highly reactive PIB having more than 90 mol% content of terminal double bonds. 5 Dispersant D is derived from 2300 Mn highly reactive PIB having more than 90 mol% content of terminal double bonds. | | | |

As shown in Table 3, lubricants including the uncapped dispersants generally had poor FZG performance.

### EXAMPLE 2

Various post-treated succinimide dispersants were prepared and evaluated for extreme pressure performance, copper leaching, and extreme pressure performance. The dispersants evaluated for this Example included succinimides obtained from reacting PIB with maleic anhydride to form a PIB succinic anhydride or acid and further reacting the PIB succinic anhydride or acid with a polyalkylene polyamine as generally described above in Example 1. The polyalkylene polyamine was a polyamine bottoms product (e.g., a heavy polyamine) including a mixture of polyalkylene polyamines comprising small amounts of lower polyamine oligomers, such as TEPA (tetraethylene pentaamine) and PEHA (pentaethylene hexamine), but primarily oligomers with 6 or more nitrogen atoms, 2 or more primary amines per molecule, and more extensive branching than conventional polyamine mixtures. The succinimide dispersants were then post-treated with various capping agents as explained below:

Preparation of Sample A: 1 equivalent of uncapped Dispersant C from Example 1 and 0.3 equivalents of potassium carbonate were charged to a 1L reactor kettle with agitator, thermocouple, heating mantle, and Dean Stark trap. The reactor kettle was placed under nitrogen and then heated to about 100°C. Then, 0.2 equivalents of benzoyl chloride was added, allowing the reaction to exotherm, and then holding under vacuum at about 140°C for about 2 hours. The resultant product was filtered under pressure over a Hiflow Super Cel Celite. The potassium carbonate was added at the beginning of the reaction to neutralize any acid byproduct (e.g., HCl) that may be formed with the addition of benzoyl chloride.

Preparation of Sample B: 1 equivalent of uncapped Dispersant C from Example 1 and 1 equivalent of potassium carbonate were charged to a 1L reactor kettle with agitator, thermocouple, heating mantle, and Dean Stark trap. The reactor kettle was placed under nitrogen and then heated to about 100°C. Then, 0.2 equivalents of oleoyl chloride was added, allowing the reaction to exotherm, and then holding under vacuum at about 140°C for about 2 hours. The resultant product was filtered under pressure over a Hiflow Super Cel Celite. The potassium carbonate was added at the beginning of the reaction to neutralize any acid byproduct (e.g., HCl) that may be formed with the addition of oleoyl chloride.

Preparation of Sample C: 1 equivalent of uncapped Dispersant C from Example 1 and 0.4 equivalents of potassium carbonate were charged to a 1L reactor kettle with agitator, thermocouple, heating mantle, and Dean Stark trap. The reactor kettle was placed under nitrogen and then heated to about 100°C. Then, 0.3 equivalents of octyl bromide was added, allowing the reaction to exotherm, and then holding under vacuum at about 140°C for about 2 hours. The resultant product was filtered under pressure over a Hiflow Super Cel Celite. The potassium carbonate was added at the beginning of the reaction to neutralize any acid byproduct (e.g., HBr) that may be formed with the addition of octyl bromide.

Preparation of Sample D: 1 equivalent of uncapped Dispersant D from Example 1 and 0.4 equivalents of potassium carbonate were charged to a 1L reactor kettle with agitator, thermocouple, heating mantle, and Dean Stark trap. The reactor kettle was placed under nitrogen and then heated to about 110°C. Then, 0.3 equivalent of acetic anhydride was added, allowing the reaction to exotherm, and then holding under vacuum at about 140°C for about 2 hours. The resultant product was filtered under pressure over a Hiflow Super Cel Celite. The potassium carbonate was added at the beginning of the reaction to neutralize any acid byproduct that may be formed with the addition of acetic anhydride.

Preparation of Sample E: 1 equivalent of uncapped Dispersant C from Example 1 and 0.6 equivalents of potassium carbonate were charged to a 1L reactor kettle with agitator, thermocouple, heating mantle, and Dean Stark trap. The reactor kettle was placed under nitrogen and then heated to about 100°C. Then, 0.4 equivalents of benzyl bromide was added, allowing the reaction to exotherm, and then holding under vacuum at about 140°C for about 2 hours. The resultant product was filtered under pressure over a Hiflow Super Cel Celite. The potassium carbonate was added at the beginning of the reaction to neutralize any acid byproduct (e.g., HBr) that may be formed with the addition of benzyl bromide.

Preparation of Sample F: 1 equivalent of uncapped Dispersant C from Example 1 and 0.2 equivalents of cesium carbonate were charged to a 1L reactor kettle with agitator, thermocouple, heating mantle, and Dean Stark trap. The reactor kettle was placed under nitrogen and then heated to about 110°C. Then, 0.2 equivalents of ethylene carbonate was added, allowing the reaction to exotherm, and then holding under vacuum at about 160°C for about 3 hours. The resultant product was filtered under pressure over a Hiflow Super Cel Celite.

Preparation of Sample G: 1 equivalent of uncapped Dispersant C from Example 1 was charged to a 1L reactor kettle with agitator, thermocouple, heating mantle, and Dean Stark trap. The reactor kettle was placed under nitrogen and then heated to about 100°C. Then, 0.2 equivalents of phenyl isocyanate was added, allowing the reaction to exotherm, and then holding under vacuum at about 140°C for about 2 hours. The resultant product was filtered under pressure over a Hiflow Super Cel Celite.

Preparation of Sample H: 1 equivalent of uncapped Dispersant C from Example 1, 0.2 equivalents of 2-ethylhexyl glycidyl ether, and 0.1 equivalents of pyridine were charged to a 1L reactor kettle with agitator, thermocouple, heating mantle, and Dean Stark trap. The reaction was allowed to stir at 105°C for 20 hours, then heated to 120 °C with added water under vacuum to steam distill pyridine out of the product. The kettle was then held under vacuum at about 145°C heated to for about 2 hours. The resultant product was filtered under pressure over a Hiflow Super Cel Celite.

Preparation of Sample I: 1 equivalent of uncapped Dispersant A from Example 1 and 0.4 equivalents of potassium carbonate were charged to a 1L reactor kettle with agitator, thermocouple, heating mantle, and Dean Stark trap. The reactor kettle was placed under nitrogen and then heated to about 110°C. Then, 0.3 equivalent of acetic anhydride was added, allowing the reaction to exotherm, and then holding under vacuum at about 140°C for about 2 hours. The resultant product was filtered under pressure over a Hiflow Super Cel Celite. The potassium carbonate was added at the beginning of the reaction to neutralize any acid byproduct that may be formed with the addition of acetic anhydride.

Preparation of Sample J: An Eschweiler-Clark type methylation was performed by adding 1 equivalent of uncapped Dispersant C from Example 1 to a 1L reactor kettle followed by addition of 0.3 equivalents of 37% formaldehyde (aq) with agitator, thermocouple, heating mantle, and Dean Stark trap. The reactor kettle was placed under nitrogen and then heated to about 80°C and stirred for 6 hours. Then, 0.5 equivalents of formic acid was added dropwise over 2 hours, and allowed to stir overnight for 18 hours. Vacuum was then applied for 2 hours at 140 °C. The resultant product was filtered under pressure over a Hiflow Super Cel Celite.

Preparation of Sample K: 1 equivalent of uncapped Dispersant C from Example 1 was charged to a 1L reactor kettle with agitator, thermocouple, heating mantle, and Dean Stark trap. The reactor kettle was placed under nitrogen and then heated to about 110°C. Then, 0.2 equivalents of isatoic anhydride was added, allowing the reaction to exotherm, and then holding under vacuum at about 140°C for about 2 hours. The resultant product was filtered under pressure over a Hiflow Super Cel Celite.

Preparation of Sample L: 1 equivalent of uncapped Dispersant C from Example 1 and 0.4 equivalents of potassium carbonate were charged to a 1L reactor kettle with agitator, thermocouple, heating mantle, and Dean Stark trap. The reactor kettle was placed under nitrogen and then heated to about 110°C. Then, 0.3 equivalent of acetic anhydride was added, allowing the reaction to exotherm, and then holding under vacuum at about 140°C for about 2 hours. The resultant product was filtered under pressure over a Hiflow Super Cel Celite. The potassium carbonate was added at the beginning of the reaction to neutralize any acid byproduct that may be formed with the addition of acetic anhydride.

**Table 4: Capped Dispersants**

| **Sample** | **Base Dispersant** | **Capping Agent** | **Nitrogen* (%)** | **TBN (mg KOH/g)** |
|---|---|---|---|---|
| A | Dispersant C | Benzoyl chloride | 2.07 | 31.3 |
| B | Dispersant C | Oleoyl chloride | 2.07 | 30.1 |
| C | Dispersant C | 1-bromooctane | 2.37 | 22.4 |
| D | Dispersant D | Acetic anhydride | 0.81 | 4.5 |
| E | Dispersant C | Benzyl bromide | 1.96 | 16.8 |
| F | Dispersant C | Ethylene carbonate | 2.12 | 40.5 |
| G | Dispersant C | Phenyl isocyanate | 2.92 | 17.4 |
| H | Dispersant C | 2-ethylhexyl glycidyl ether | 2.05 | 35.6 |
| I | Dispersant A | Acetic Anhydride | 1.86 | 12.9 |
| J | Dispersant C | Formaldehyde | 2.13 | 36.5 |
| K | Dispersant C | Isatoic anhydride | 2.72 | 31.7 |
| L | Dispersant C | Acetic Anhydride | 2.1 | 13.8 |

| | | | | |
|---|---|---|---|---|
| *Total nitrogen in dispersant (ASTM D5291) | | | | |

### EXAMPLE 3

About 1 weight percent of the various capped dispersants of Example 2 were added to an additive package and blended with an API Group II/III base oil mix to form an electric motor lubricating fluid suitable for electric or hybrid electric vehicles. The additive package was the same in each sample and contained an ashless dialkyl dithiophosphate antiwear additive including at least 3-[[bis(2-methylpropoxy) phosphinothioyl]thio]-2-methyl-propanoic acid, antifoam, process oil, aminic antioxidant, low based calcium sulfonate detergent (having a TBN approximately 28). The additive package was present in amount to deliver approximately 60 ppm phosphorus and approximately 120 ppm sulfur from the antiwear additive to the fluid. The total sulfur of the inventive and comparative finished fluids were essentially the same and were in the range of 140 to 200 ppm sulfur. The low based calcium sulfonate detergent was present in an amount to deliver approximately 36 ppm calcium to the fluid. Results for extreme pressure, copper leaching, and electrical conductivity are provided in Table 5 below.

**Table 5: Lubricant Performance**

| **Lubricant ID** | **Dispersant ID** | **Capping Moiety** | **FLS** | **Copper Leaching (ppm)** | **Electrical Conductivity 100°C (nS/M)** |
|---|---|---|---|---|---|
| C1 | A | Benzoyl | 4 | 108 | 15.4 |
| C2 | B | Oleoyl | 6 | 127 | 12.8 |
| **I1** | **C** | **Octyl** | **8** | **91** | **23.1** |
| **I2** | **D** | **Acetyl** | **8** | **34** | **6.07** |
| C3 | E | Benzyl | 7 | 134 | 45.7 |
| C4 | F | Ethylene carbonate | 4 | 99 | 13.0 |
| **I3** | **G** | **Anilide** | **9** | **39** | **21.2** |
| C5 | H | Glycidyl ether | 7 | 48 | 12.4 |
| **I4** | **I** | **Acetyl** | **10** | **34** | **11.7** |
| C6 | J | Methyl | 5 | 75 | 9.8 |
| C7 | K | isatoyl | 6 | 34 | 40.6 |
| **I5** | **L** | **Acetyl** | **8** | **83** | **14.5** |

As shown in Table 5 above, while Comparative lubricants C1, C2, C4, C5, and C6 exhibited a low electrical conductivity below 25 nS/M, these Comparative lubricants had low FLS ratings and/or high copper leaching and were otherwise unacceptable as an electric motor lubricating fluid. Comparative lubricants C3 and C7 had unacceptably high electrical conductivity. The Inventive lubricants had identical compositions to the comparative lubricants except having the dispersants with different capping agents, and unexpectedly, the Inventive lubricants achieved low conductivity (e.g., less than 25 nS/M at 100°C), low copper leaching (e.g., less than 100 ppm of copper), and high FLS ratings (e.g., FLS or at least 8). It was not anticipated that varying the capping agent on a dispersant compound would impact all three performance evaluations.

It is to be understood that while the lubricating composition and compositions of this disclosure have been described in conjunction with the detailed description thereof and summary herein, the foregoing description is intended to illustrate and not limit the scope of the disclosure, which is defined by the scope of the appended claims. Other aspects, advantages, and modifications are within the scope of the claims. It is intended that the specification and examples be considered as exemplary only, with a true scope of the disclosure being indicated by the following claims.

Other embodiments of the present disclosure will be apparent to those skilled in the art from consideration of the specification and practice of the embodiments disclosed herein. As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification are to be understood as being modified in all instances by the term "about," whether or not the term "about" is present. Accordingly, unless indicated to the contrary, the numerical parameters set forth in the specification are approximations that may vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements.

It is to be understood that each component, compound, substituent or parameter disclosed herein is to be interpreted as being disclosed for use alone or in combination with one or more of each and every other component, compound, substituent or parameter disclosed herein.

It is further understood that each range disclosed herein is to be interpreted as a disclosure of each specific value within the disclosed range that has the same number of significant digits. Thus, a range of from 1 to 4 is to be interpreted as an express disclosure of the values 1, 2, 3 and 4 as well as any range of such values such as 1 to 4, 1 to 3, 1 to 2, 2 to 4, 2 to 3 and so forth.

It is further understood that each lower limit of each range disclosed herein is to be interpreted as disclosed in combination with each upper limit of each range and each specific value within each range disclosed herein for the same component, compounds, substituent or parameter. Thus, this disclosure to be interpreted as a disclosure of all ranges derived by combining each lower limit of each range with each upper limit of each range or with each specific value within each range, or by combining each upper limit of each range with each specific value within each range.

Furthermore, specific amounts/values of a component, compound, substituent or parameter disclosed in the description or an example is to be interpreted as a disclosure of either a lower or an upper limit of a range and thus can be combined with any other lower or upper limit of a range or specific amount/value for the same component, compound, substituent or parameter disclosed elsewhere in the application to form a range for that component, compound, substituent or parameter.

The invention further relates to the following numbered embodiments:
1. An electric motor lubricating fluid suitable for electric or hybrid-electric vehicles, the electric motor lubricating fluid comprising:
   one or more base oils of lubricating viscosity;
   an oil-soluble phosphorus antiwear additive including an ashless dialkyl dithiophosphoric acid providing no more than about 200 ppm sulfur to the electric motor lubricating fluid;
   a succinimide dispersant reaction product obtained by:
      (i) reacting a hydrocarbyl-substituted dicarboxylic acid or anhydride with a polyalkylene polyamine to form an intermediate having at least one secondary amine;
      (ii) reacting the secondary amine with a capping agent including one or more of a C6 or greater alkyl halide, acetic anhydride, and/or phenyl isocyanate;
   wherein the electric motor lubricating fluid contains less than about 300 ppm of total sulfur; and
   wherein the electric motor lubricating fluid includes substantially no corrosion inhibitor additive.
2. The electric motor lubricating fluid of embodiment 1, wherein the electric motor lubricating fluid is substantially free of boron.
3. The electric motor lubricating fluid of embodiment 1, further including a sulfonate detergent in amounts to contribute a TBN of about 3 to about 50 (ASTM D2896) to the electric motor lubricating fluid.
4. The electric motor lubricating fluid of embodiment 3, wherein the sulfonate detergent is calcium sulfonate and provides about 10 to about 250 ppm calcium to the electric motor lubricating fluid.
5. The electric motor lubricating fluid of embodiment 1, further including up to about 0.8 weight percent of one or more aminic antioxidants antioxidant nitrogen.
6. The electric motor lubricating fluid of embodiment 1, wherein the electric motor lubricating fluid is substantially free of corrosion inhibitor additives selected from substituted or unsubstituted benzotriazole or triazole compounds, tolyltriazole compounds, corrosion inhibitors derived from monocarboxylic or polycarboxylic acids, akenyl succinic acid or anhydride corrosion inhibitors, corrosion inhibitors derived from ether amines, acid phosphates, polylethoxylated compounds, imidazolines, or combinations thereof.
7. The electric motor lubricating fluid of embodiment 1, wherein the oil-soluble phosphorus antiwear additive including the ashless dialkyl dithiophosphate is made by a process comprising the steps of (a) reacting an organic hydroxy compound with phosphorus pentasulfide to form a reaction product and (b) further reacting the reaction product with an unsaturated carboxylic acid to form the oil-soluble phosphorus antiwear additive including the ashless dialkyl dithiophosphate.
8. The electric motor lubricating fluid of embodiment 1, wherein the ashless dialkyl dithiophosphate includes a compound of Formula I, or a salt thereof: 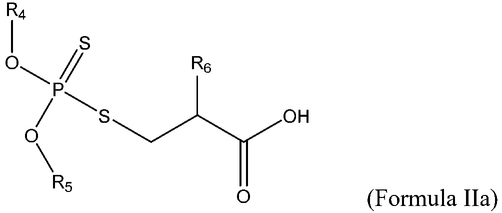 wherein R₄ and R₅ are, independently, a C₁ to C₁₀ linear or branched alkyl group, and R₆ is -H or -CH₃.
9. The electric motor lubricating fluid of embodiment 8, wherein the ashless dialkyl dithiophosphoate includes 3-[[bis(2-methylpropoxy) phosphinothioyl]thio]-2-methyl-propanoic acid.
10. The electric motor lubricating fluid of embodiment 1, wherein the succinimide dispersant is post treated with a capping agent that is substantially free of phosphorus containing compounds and/or substantially free of boron-containing compounds.
11. The electric motor lubricating fluid of embodiment 1, wherein the electric motor lubricating fluid exhibits about 100 ppm or less of copper leaching pursuant to ASTM D130.
12. The electric motor lubricating fluid of embodiment 11, wherein the electric motor lubricating fluid has a failure load stage rating of 8 or higher in the FZG A10/16.6R/120 test of ASTM D5182.
13. The electric motor lubricating fluid of embodiment 12, wherein the electric motor lubricating fluid exhibits an electrical conductivity of less than 25 nS/M at 100°C measured using a modified conductivity test pursuant to ASTM D2624-15 using the electric motor lubricating fluid and measured at 20 Hz and at 100°C.
14. A method for lubricating a driveline component including an electric motor, the method comprising:
   lubricating the driveline component with an electric motor lubricating fluid and wherein the electric motor lubricating fluid contacts portions of the electric motor;
   wherein in the electric motor lubricating fluid includes (a) one or more base oils of lubricating viscosity; (b) an oil-soluble phosphorus antiwear additive including an ashless dialkyl dithiophosphoric acid providing no more than about 200 ppm sulfur to the electric motor lubricating fluid; (c) a succinimide dispersant reaction product obtained by: (i) reacting a hydrocarbyl-substituted dicarboxylic acid or anhydride with a polyalkylene polyamine to form an intermediate having at least one secondary amine, and (ii) reacting the secondary amine with a capping agent including one or more of a C6 or greater alkyl halide, an acetic anhydride, and/or phenyl isocyannate; and (d) wherein the electric motor lubricating fluid contains less than about 300 ppm total sulfur; and
   wherein the electric motor lubricating fluid exhibits about 100 ppm or less of copper leaching pursuant to ASTM D130, a failure load stage rating of 8 or higher in the FZG A10/16.6R/120 test of ASTM D5182, and/or an electrical conductivity of less than 25 nS/M at 100°C measured using a modified conductivity test pursuant to ASTM D2624-15 using the electric motor lubricating fluid and measured at 20 Hz and at 100°C.
15. The method of embodiment 14, wherein the electric motor lubricating fluid is substantially free of boron.
16. The method of embodiment 14, further including a sulfonate detergent in amounts to contribute a TBN of about 3 to about 50 (ASTM D2896) to the electric motor lubricating fluid.
17. The method of embodiment 16, wherein the sulfonate detergent is calcium sulfonate and provides about 10 to about 250 ppm calcium to the electric motor lubricating fluid.
18. The method of embodiment 14, further including up to about 0.8 weight percent of one or more aminic antioxidants.
19. The method of embodiment 14, wherein the electric motor lubricating fluid is substantially free of corrosion inhibitor additives selected from substituted or unsubstituted benzotriazole or triazole compounds, tolyltriazole compounds, corrosion inhibitors derived from monocarboxylic or polycarboxylic acids, akenyl succinic acid or anhydride corrosion inhibitors, corrosion inhibitors derived from ether amines, acid phosphates, polylethoxylated compounds, imidazolines, or combinations thereof.
20. The method of embodiment 14, wherein the oil-soluble phosphorus antiwear additive including the ashless dialkyl dithiophosphate is made by a process comprising the steps of (a) reacting an organic hydroxy compound with phosphorus pentasulfide to form a reaction product and (b) further reacting the reaction product with an unsaturated carboxylic acid to form the oil-soluble phosphorus antiwear additive including the ashless dialkyl dithiophosphate.
21. The method of embodiment 14, wherein the ashless dialkyl dithiophosphate includes a compound of Formula I, or a salt thereof: 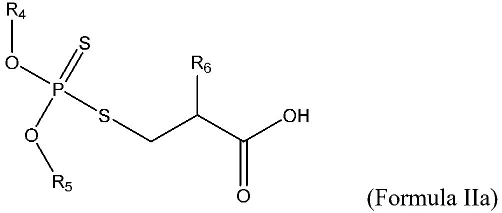 wherein R₄ and R₅ are, independently, a C₁ to C₁₀ linear or branched alkyl group, and R₆ is -H or -CH₃.
22. The method of embodiment 14, wherein the succinimide dispersant is post treated with a capping agent that is substantially free of phosphorus containing compounds and/or substantially free of boron-containing compounds.

## Claims

1. An electric motor lubricating fluid suitable for electric or hybrid-electric vehicles, the electric motor lubricating fluid comprising:
one or more base oils of lubricating viscosity;
one or more ashless dialkyl dithiophosphoric acids providing no more than about 200 ppm sulfur to the electric motor lubricating fluid;
a succinimide dispersant reaction product obtained by:
(i) reacting a hydrocarbyl-substituted dicarboxylic acid or anhydride with a polyalkylene polyamine to form an intermediate having at least one secondary amine;
(ii) reacting the secondary amine with a capping agent including one or more of a C6 or greater alkyl halide, acetic anhydride, and/or phenyl isocyanate;
wherein the electric motor lubricating fluid contains less than about 300 ppm of total sulfur.

2. The electric motor lubricating fluid of claim 1, wherein the electric motor lubricating fluid is substantially free of boron and/or wherein the one or more ashless dialkyl dithiophosphoric acids provides 10 to 180 ppm, preferably 80 to 150 ppm sulfur to the electric motor lubricating fluid; and/or wherein the electric motor lubricating fluid contains 20 to 250. Preferably 80 to 200 ppm of total sulfur.

3. The electric motor lubricating fluid of claim 1 or 2, further including a sulfonate detergent in amounts to contribute a TBN of about 3 to about 50 (ASTM D2896) to the electric motor lubricating fluid and/or wherein the sulfonate detergent is calcium sulfonate and provides about 10 to about 250 ppm calcium to the electric motor lubricating fluid.

4. The electric motor lubricating fluid of any one of claims 1 to 3, further including up to about 0.8 weight percent, preferably 0.05 to 0.7 weight percent of one or more aminic antioxidants.

5. The electric motor lubricating fluid of any one of claims 1 to 4, wherein the electric motor lubricating fluid is substantially free of corrosion inhibitor additives selected from substituted or unsubstituted benzotriazole or triazole compounds, tolyltriazole compounds, corrosion inhibitors derived from monocarboxylic or polycarboxylic acids, akenyl succinic acid or anhydride corrosion inhibitors, corrosion inhibitors derived from ether amines, acid phosphates, polylethoxylated compounds, imidazolines, or combinations thereof, preferably wherein the electric motor lubricating fluid includes substantially no corrosion inhibitor additive.

6. The electric motor lubricating fluid of any one of claims 1 to 5, wherein the ashless dialkyl dithiophosphate is made by a process comprising the steps of (a) reacting an organic hydroxy compound with phosphorus pentasulfide to form a reaction product and (b) further reacting the reaction product with an unsaturated carboxylic acid to form the oil-soluble phosphorus antiwear additive including the ashless dialkyl dithiophosphate; and/or wherein the ashless dialkyl dithiophosphate includes a compound of Formula I, or a salt thereof: 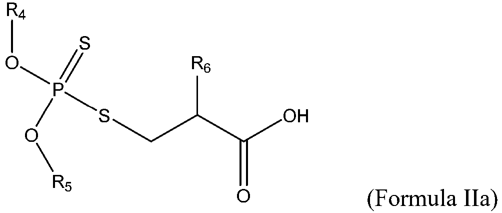 wherein R₄ and R₅ are, independently, a C₁ to C₁₀ linear or branched alkyl group, and R₆ is -H or -CH₃; specifically wherein the ashless dialkyl dithiophosphate includes 3-[[bis(2-methylpropoxy) phosphinothioyl]thio]-2-methyl-propanoic acid.

7. The electric motor lubricating fluid of any one of claims 1 to 6, wherein the succinimide dispersant is post treated with a capping agent that is substantially free of phosphorus containing compounds and/or substantially free of boron-containing compounds.

8. The electric motor lubricating fluid of any one of claims 1 to 7, wherein one or more of i) to iii):
i) the electric motor lubricating fluid exhibits about 100 ppm or less of copper leaching pursuant to ASTM D130;
ii) the electric motor lubricating fluid has a failure load stage rating of 8 or higher in the FZG A10/16.6R/120 test of ASTM D5182;
iii) the electric motor lubricating fluid exhibits an electrical conductivity of less than 25 nS/M at 100°C measured using a modified conductivity test pursuant to ASTM D2624-15 using the electric motor lubricating fluid and measured at 20 Hz and at 100°C.

9. The electric motor lubricating fluid of any one of claims 1 to 8, wherein the secondary amine is selected from one or more of the the group consisting of aminoguanidine bicarbonate (AGBC), diethylene triamine (DETA), triethylene tetramine (TETA), tetraethylene pentamine (TEPA), pentaethylene hexamine (PEHA) and/or polyamine bottoms, a mixture of polyalkylenepolyamines including branched polyamines having two or more primary amines per molecule, the mixture having an average of 5 to 12 nitrogen atoms, preferably at least 6 or about 6.5 nitrogen atoms per molecule.

10. The electric motor lubricating fluid of any one of claims 1 to 9, wherein the capping agent is selected from one or more of a C6 to C12, preferably C8 to C10, most preferably C10 alkyl halide, acetic anhydride, phenyl isocyanate.

11. A method for lubricating a driveline component including an electric motor, the method comprising:
lubricating the driveline component with an electric motor lubricating fluid as defined in any one of claims 1 to 9 and wherein the electric motor lubricating fluid contacts portions of the electric motor.

12. A use of the electric motor lubricating fluid as defined in any one of claims 1 to 10 for improving one or more of copper corrosion resistance, low electrical conductivity and extreme pressure performance.

13. A use of the electric motor lubricating fluid as defined in any one of claims 1 to 9 for achieving one or more of ) to iii):
i) wherein the electric motor lubricating fluid exhibits about 100 ppm or less of copper leaching pursuant to ASTM D130;
ii) wherein the electric motor lubricating fluid has a failure load stage rating of 8 or higher in the FZG A10/16.6R/120 test of ASTM D5182;
iii) wherein the electric motor lubricating fluid exhibits an electrical conductivity of less than 25 nS/M at 100°C measured using a modified conductivity test pursuant to ASTM D2624-15 using the electric motor lubricating fluid and measured at 20 Hz and at 100°C.

14. The use of claim 12 or 13 wherein the electric motor lubricating fluid lubricates a driveline component including an electric motor.

15. The use of any one of claims 12 to 14 for lubricating the driveline component of an electric or hybrid-electric vehicle.
